Europäisches Patentamt

European Patent Office

Office européen des brevets

(19)

(11) Veröffentlichungsnummer: **0 299 310 B1**

(12) **EUROPÄISCHE PATENTSCHRIFT**

(45) Veröffentlichungstag der Patentschrift: **22.01.92**

(51) Int. Cl.⁵: **G01N 31/16**

(21) Anmeldenummer: **88110605.8**

(22) Anmeldetag: **02.07.88**

(54) **Lösungsmittel für die Wasserbestimmung nach Karl Fischer.**

(30) Priorität: **13.07.87 DE 3723084**

(43) Veröffentlichungstag der Anmeldung:
**18.01.89 Patentblatt 89/03**

(45) Bekanntmachung des Hinweises auf die
Patenterteilung:
**22.01.92 Patentblatt 92/04**

(84) Benannte Vertragsstaaten:
**BE CH DE FR GB IT LI NL SE**

(56) Entgegenhaltungen:
**EP-A- 0 135 098**
**DE-A- 2 235 407**
**DE-A- 3 614 135**
**DE-C- 1 075 341**

**E. SCHOLZ. "Karl-Fischer-Titration: Methoden zur Wasserbestimmung", 1. Auflage,
Seiten 5,27-44,58-61,108,109, Springer-Verlag,
1984, Berlin**

**Anal. Chem. 38, 67 (1966)**

**Anal. Chem. 39, 1877 (1967)**

**J. Analiticeskoi Chim. 37, 1906 (1982)**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Fischer, Wolfgang, Dr.
Kröhweg 27
W-6100 Darmstadt(DE)**
Erfinder: **Krenn, Karl Dieter
Zieglerstrasse 41
W-6102 Pfungstadt(DE)**

EP 0 299 310 B1

**Beschreibung**

Die Erfindung betrifft ein Lösungsmittel für die Wasserbestimmung nach Karl-Fischer und ein Verfahren zur Bestimmung von Wasser unter Verwendung eines speziellen Lösungsmittelsystems.

Die Wasserbestimmung nach der Karl-Fischer-Methode ist seit langem bekannt (Angew. Chemie 48, 394 (1935)). Bei der Durchführung dieser Methode wird im allgemeinen ein Lösungsmittel vorgelegt und zur Entfernung des Wassergehalts mit Karl-Fischer-Lösung austitriert. Anschließend wird eine bestimmte Menge der zu untersuchenden Probe im Lösungsmittel gelöst und mit der Karl-Fischer-Lösung bis zum Umschlag titriert. Aus der Probenmenge, dem Verbrauch an Karl-Fischer-Lösung und dem Faktor der Lösung wird dann der Wassergehalt berechnet.

Als Lösungsmittel werden im allgemeinen niedere einwertige Alkohole, vor allem Methanol und Ethanol oder einseitig veretherte zweiwertige Alkohole wie Ethylenglykolmonomethylether eingesetzt. Gebräuchlich sind z.B. auch Pyridin, Chloroform, Dimethylsulfoxid, Formamid, Dimethylformamid und andere Lösungsmittel. Nie Lösungsmittel werden entweder allein oder als Gemische eingesetzt, um die Lösungseigenschaften für bestimmte Substanzgruppen zu verbessern oder um störende Nebenreaktionen zu unterdrücken.

In der DE-C-1 075 341 sind als übliche Lösungsmittel z. B. einwertige Alkohole wie Methanol, Ethanol, Propanol, Butanol erwähnt, aber auch Derivate zweiwertiger Alkohole oder auch Gemische dieser Alkohole mit beispielsweise Dioxan und Chloroform.

In der DE-A-3-614 135 wird eine Elektrolytlösung für coulometrische Karl-Fischer-Titrationen beschrieben, die als Lösungsmittel ein Gemisch aus a) einem mehrwertigen Alkohol oder einer Etherverbindung davon, b) Methanol und c) einem halogenierten Kohlenwasserstoff oder einem aromatischen Kohlenwasserstoff darstellt. Als Komponenten c) werden z.B. Chloroform oder das unpolare Xylol vorgeschlagen.

Die Löslichkeit von unpolaren Verbindungen wie Erdölen oder Dieselölen ist in diesen Lösungsmitteln jedoch sehr schlecht. Das Problem wird noch dadurch vergrößert, daß diese Substanzen oft sehr wenig Wasser enthalten und deshalb eine größere Probenmenge gelöst werden muß. Unter diesen Bedingungen ist eine exakte Wasserbestimmung nach Karl-Fischer ohne den Zusatz eines Lösungsvermittlers nicht möglich. Bisher wurden hierfür Pyridin, halognierte Kohlenwasserstoffe (z.B. Chloroform) aromatische Kohlenwasserstoffe (z.B. Xylol) oder aprotische Lösungsmittel eingesetzt, die jedoch alle keine befriedigenden Ergebnisse liefern.

In Anal. Chem. 38, 67 (1966) wird eine modifizierte Karl-Fischer-Titration zur Bestimmung von Wasser in Gegenwart von Silanol beschrieben, wobei lineare, verzweigte, cyclische und aromatische Alkohole mit 2 bis 12 C-Atomen als Probenverdünnungsmittel eingesetzt werden. Da die Wasserbestimmung in monomeren oder kurzkettigen Silanolen danach nicht durchgeführt werden kann, schlagen die gleichen Autoren in Anal. Chem 39, 1877 (1967) vor, unter Kühlung ein Verdünnungsmittel aus einem hochmolekularen Alkohol und Pyridin einzusetzen; als hochmolekularer Alkohol wird 2-Ethyl-1-hexanol vorgeschlagen. Die Publikation in J. Analiticeskoi Chim. 37, 1096 (1982) befaßt sich ebenfalls mit der Bestimmung von Wasser in Silanolen mit Hilfe eines modifizierten Karl-Fischer Reagenzes, das Octylalkohol oder Ethylcellosolve enthalten kann.

Allen diesen Publikationen liegt das gemeinsame Problem zugrunde, die störende Wasserbildung, die in Gegenwart von Silanol mit niederen Alkoholen eintritt, zu unterdrücken. Im Gegensatz dazu dienen die nach der Erfindung erforderlichen höheren Alkohole einem anderen Zweck; eine Wasserbildung kann dabei nicht eintreten.

Der Erfindung liegt die Aufgabe zugrunde, die Verwendung eines Lösungsmittelsystems vorzuschlagen, das eine exakte Wasserbestimmung nach Karl-Fischer, in Proben von unpolaren Verbindungen gestattet.

Überraschenderweise wurde gefunden, daß sich zu diesem Zweck höhere Alkohole sehr viel besser eignen als die genannten Lösungsmittel und Lösungsvermittler.

Gegenstand der Erfindung ist die Verwendung von mindestens einem einwertigen aliphatischen Alkohol mit 6 bis 14 Kohlenstoffatomen in den üblichen Karl-Fischer Lösungsmitteln zur Wasserbestimmung nach Karl-Fischer in Proben von unpolaren Verbindungen.

Als höhere Alkohole kommen einwertige Alkohole mit 6 bis 14 Kohlenstoffatomen infrage, vorzugsweise Alkohole mit 8 bis 12 Kohlenstoffatomen wie Octanol, Nonanol, Decanol, Undecanol, Dodecanol und deren Isomeren. Als besonders geeignet erweist sich Decanol. Diese Alkohole können entweder allein oder auch als Gemische eingesetzt werden.

Das erfindungsgemäße Lösungsmittelsystem enthält bis zu 70 %, vorzugsweise 20 bis 50 Volumen-% des erfindungsgemäßen höheren Alkohols. Der Rest sind übliche Karl-Fischer Lösungsmittel, insbesondere niedere Alkohole. Das Lösungsmittelsystem eignet sich sowohl für coulometrische als auch für volumetrische Wasserbestimmungen nach Karl-Fischer.

Zur Herstellung des Lösungsmittelsystems werden z.B. Methanol und Decanol 1:1 gemischt. Zur Wasserbestimmung wird das erfindungsgemäße Lösungsmittelsystem, in dem die zu bestimmende Probe gelöst werden soll, zunächst austitriert, die Probe wird hinzugegeben und mit einem üblichen Karl-Fischer-Reagenz erneut bis zum Umschlag titriert. Ein übliches Karl-Fischer-Reagenz enthält z.B. in einem geeigneten Lösungsmittel Schwefeldioxid, Jod und eine Base wie Pyridin oder Pyridinersatzmittel wie Imidazol, Ethanolamine, Morpholin, Guanidin oder andere Aminbasen.

Beispiel 1

Herstellung eines Lösungsmittels

Zur Herstellung eines Lösungsmittelsystems werden 500 ml wasserfreies Methanol und 500 ml wasserfreies Decanol gemischt.

Beispiel 2

Coulometrisches Reagenz

Zusammensetzung:

136 g Imidazol
64 g Schwefeldioxid
12 g Imidazoliumjodid gelöst in 1 l Methanol

Anwendung:

Anoden- und Kathodenraum eines Karl-Fischer-Coulometers 652 von METHROM werden mit der obigen Reagenzlösung befüllt und das Gerät startbereit gefahren. Anschließend wird solange Dieselöl eingspritzt, bis die Lösung trübe und die Wasserwerte falsch werden. Es werden maximal 2 ml aufgenommen.
Der Versuch wird mit Lösungen wiederholt, bei denen 30 % der Reagenzlösung durch einen Lösungsvermittler ersetzt ist. Die anschließende Tabelle zeigt den jeweiligen Lösungsvermittler und die maximale Aufnahmemenge für Dieselöl.

| Lösungsvermittler | maximale Aufnahme |
|---|---|
| Chloroform | 6 ml |
| Xylol | 4 ml |
| Octanol | 10 ml |
| Decanol | 22 ml |
| Dodecanol | 17 ml |

Die Tabelle zeigt, daß mit einem Decanol enthaltenden Lösungsmittelsystem mehr als 5mal mehr Dieselöl gelöst werden kann als mit einem Xylol enthaltenden Lösungsmittelsystem.

Beispiel 3

Volumetrisches Reagenz

Zusammensetzung:

158 g Diethanolamin
96 g Schwefeldioxid gelöst in 1 l Methanol

Anwendung:

20 ml des obigen Reagenzes werden solange mit Dieselöl versetzt, bis eine Trübung auftritt. Maximale Aufnahmemenge: 0,3 ml
Der Versuch wird mit Lösungen wiederholt, bei denen 50 % des Reagenzes durch einen Lösungsvermittler ersetzt ist. Die folgende Tabelle zeigt den jeweiligen Lösungsvermittler und die maximale Aufnahmemenge für Dieselöl.

| Lösungsvermittler | maximale Aufnahme |
|---|---|
| Chloroform | 8 ml |
| Xylol | 0,6 ml |
| Octanol | 9 ml |
| Decanol | 16 ml |
| Dodecanol | 17 ml |

In diesem Fall lassen sich mit Decanol im Vergleich zu Xylol mehr als 26mal mehr Dieselöl im Lösungsmittelsystem aufnehmen.

Beispiel 4

Analog Beispiel 2 wird ein coulometrisches Reagenz eingesetzt und die Aufnahmefähigkeit für Dieselöl mit einer homologen Reihe von einwertigen Alkoholen untersucht. Das Ergebnis ist in der nachstehenden Tabelle enthalten.

| Lösungsvermittler | maximale Aufnahme |
|---|---|
| Methanol | 2 ml |
| Ethanol | 4 ml |
| Propanol-2 | 5 ml |
| n-Butanol | 9 ml |
| n-Pentanol | 12 ml |
| n-Hexanol | 14 ml |
| n-Octanol | 21 ml |
| n-Decanol | 28 ml |

Beispiel 5

Analog Beispiel 3 wird ein volumetrisches Reagenz eingesetzt und die Aufnahmefähigkeit für Dieselöl mit einer homologen Reihe von Alkoholen untersucht (jeweils 50 % des Reagenzes). Das Ergebnis ist in der nachstehenden Tabelle enthalten.

| Lösungsvermittler | maximale Aufnahme |
|---|---|
| Methanol | 0,2 ml |
| Ethanol | 1,2 ml |
| Propanol-2 | 2,2 ml |
| n-Butanol | 5,4 ml |
| n-Pentanol | 9,2 ml |
| n-Hexanol | 15,6 ml |
| n-Octanol | 21,8 ml |
| n-Decanol | 19,2 ml |

Ab Hexanol ist ein deutlicher Sprung in der Aufnahmefähigkeit des Lösungsmittelsystems für Dieselöl zu erkennen.

**Patentansprüche**

1. Verwendung von mindestens einem einwertigen aliphatischen Alkohol mit 6 bis 14 Kohlenstoffatomen in den üblichen Karl-Fischer Lösungsmitteln als Lösungsvermittler bei der Wasserbestimmung nach Karl-Fischer in Proben von unpolaren Verbindungen.

**2.** Verwendung des Lösungsmittels nach Anspruch 1, dadurch gekennzeichnet, daß es bis zu 70 Volumen-% eines Alkohols nach Anspruch 1 enthält.

**Claims**

**1.** Use of at least one monovalent aliphatic alcohol having 6 to 14 carbon atoms in the customary Karl-Fischer solvents as solubilizer in the Karl-Fischer determination of water in samples of non-polar compounds.

**2.** Use of the solvent according to Claim 1, characterised in that it contains up to 70% by volume of an alcohol according to Claim 1.

**Revendications**

**1.** Utilisation d'au moins un alcool aliphatique monovalent contenant 6 à 14 atomes de carbone dans les solvants de Karl-Fischer usuels, comme tiers solvant, lors du dosage de l'eau d'après Karl-Fischer dans des échantillons de composés non-polaires.

**2.** Utilisation du solvant selon la revendication 1, caractérisée en ce qu'il contient jusqu'à 70% en volume d'un alcool selon la revendication 1.